# EUROPÄISCHE PATENTSCHRIFT

(11) **EP 3 865 818 B1**
(45) Veröffentlichungstag und Bekanntmachung des Hinweises auf die Patenterteilung: **14.05.2025**
(21) Anmeldenummer: 20157255.9
(22) Anmeldetag: 13.02.2020
(51) Int. Cl.: G01C 15/02, G02B 5/12

(54) **REFLEKTORVORRICHTUNG FÜR EINE TACHYMETER-MESSANORDNUNG UND MESSVERFAHREN**
REFLECTOR DEVICE FOR A TACHYMETER MEASUREMENT ARRANGEMENT AND MEASURING METHOD
DISPOSITIF RÉFLECTEUR POUR UN AGENCEMENT DE MESURE DE TACHYMÈTRE ET PROCÉDÉ DE MESURE

(43) Veröffentlichungstag der Anmeldung: 18.08.2021
(73) Patentinhaber: BAUER Spezialtiefbau GmbH, 86529 Schrobenhausen (DE)
(72) Erfinder: Paulus, Simon, 86529 Schrobenhausen (DE)
(74) Vertreter: Wunderlich & Heim Patentanwälte PartG mbB

(56) Entgegenhaltungen:
- CN-U- 209 764 097
- US-A- 5 392 521

## Beschreibung

Die Erfindung betrifft eine Reflektorvorrichtung für eine Tachymeter-Messanordnung mit einem Vermessungsprisma nach dem Oberbegriff des Anspruchs 1.

Weiterhin betrifft die Erfindung ein Messverfahren mit einer Tachymeter-Messanordnung gemäß dem Anspruch 12.

Tachymeter sind hinlänglich bekannte opto-elektronische Messgeräte, welche insbesondere zur Lagevermessung in einem Gelände, beispielsweise auf einer Baustelle eingesetzt werden.

Aus der EP 2 623 677 B1 ist eine Baustellenanordnung bekannt, bei welcher ein Baustellenkoordinatensystem mit eingemessenen Fixpunkten eingerichtet ist. An den Fixpunkten werden Reflektorvorrichtungen, insbesondere Vermessungsprismas, angeordnet, welche von einem mobilen Tachymeter anvisiert werden können. Durch das Anvisieren mehrerer Vermessungsprismas kann eine beliebige Position des Tachymeters in dem vorgegebenen Baustellenkoordinatensystem bestimmt werden. Basierend auf dieser Bestimmung können mit dem Tachymeter dann mit hoher Genauigkeit weitere Lagemessungen etwa von Baugeräten, Bearbeitungsstellen oder Bauelementen vorgenommen werden.

Eine weitere Tachymeter-Messanordnung an einer Baustelle ist aus der EP 2 698 499 B1 bekannt.

Voraussetzung für einen möglichst flexiblen Einsatz eines mobilen Tachymeters ist es, dass die als Fixpunkte angebrachten Vermessungsprismas an festen und möglichst exponierten Positionen angeordnet sind, so dass diese von einer Vielzahl von Punkten an der Baustelle zuverlässig anvisiert werden können. Über das Vermessungsprisma wird üblicherweise ein Messstrahl, insbesondere ein Laserstrahl, des Tachymeters rückgespiegelt, wobei durch das Messgerät hierdurch ein Abstand und ein eventueller Höhenunterschied zuverlässig gemessen und bestimmt werden kann. Durch mehrere Messungen kann eine exakte Positionsbestimmung erfolgen.

Ist die optische Rückspiegelfunktion des Vermessungsprismas jedoch beeinträchtigt, kann keine oder nur eine fehlerbehaftete Messung durchgeführt werden.

Die CN 209 764 097 U zeigt den Oberbegriff des Anspruchs 1 und schlägt zur Vermeidung einer Kondensatbildung auf einem Vermessungsprisma vor, eine Radiator-Heizeinrichtung zu verwenden, die den Umgebungsbereich um das Vermessungsprisma kontinuierlich erwärmt und dadurch Nebel- und Eisbildung verhindert.

Der Erfindung liegt die **Aufgabe** zugrunde, eine Reflektorvorrichtung für eine Tachymeter-Messanordnung und ein Messverfahren mit einer Tachymeter-Messanordnung anzugeben, mit welchen insbesondere in einem Freigelände in besonders zuverlässiger Weise genaue Messungen vorgenommen werden können.

Die Aufgabe wird zum einen durch eine Reflektorvorrichtung mit den Merkmalen des Anspruchs 1 und zum anderen durch ein Messverfahren mit den Merkmalen des Anspruchs 12 gelöst. Bevorzugte Ausführungsformen der Erfindung sind in den abhängigen Ansprüchen angegeben.

Die erfindungsgemäße Reflektorvorrichtung umfasst eine Entfeuchtungseinrichtung gegen einen Wasserniederschlag an dem Vermessungsprisma angeordnet.

Die Erfindung beruht dabei zum einen auf der Erkenntnis, dass ein Wasserniederschlag, also etwa Kondenswasser, oder bei Temperaturen unter dem Gefrierpunkt, eine Eisschicht die optische Funktion eines Vermessungsprismas erheblich beeinträchtigt. Insbesondere bei Vermessungspunkten an Baustellen kann ein derartiger Wasserniederschlag an Vermessungsprismen auftreten.

Dabei wurde diesem Problem bisher so begegnet, dass ein Wasserniederschlag manuell mit einem Tuch oder einem Eiskratzer entfernt wurde. Hierdurch kann jedoch die exakte Positionierung des Vermessungsprismas verändert werden, wodurch nachfolgende Messungen verändert und verfälscht werden können. Darüber hinaus besteht bei exponiert angebrachten Vermessungsprismen etwa an Baustellen ein Problem der Arbeitssicherheit, insbesondere wenn Personen zur Beseitigung des Wasserniederschlags sich Zugang zu erhöhten Vermessungsprismen beschaffen müssen.

Nicht zuletzt bedeutet ein manuelles Entfernen eines Wasserniederschlags auch einen erhöhten Zeit- und Arbeitsaufwand.

Gemäß einem Aspekt der Erfindung wird dem Wasserniederschlag durch eine Entfeuchtungseinrichtung entgegengewirkt.

Nach einer bevorzugten Ausführungsform der Erfindung ist es vorgesehen, dass die Entfeuchtungseinrichtung eine Heizeinrichtung umfasst. Hierdurch wird zusätzliche Wärmeenergie an das Vermessungsprisma übertragen, so dass eine Kondenswasserschicht verdunstet oder deren Niederschlag von Anfang an vermieden wird. Auch Eisschichten können aufgeschmolzen oder deren Ausbildung von Anfang an vermieden werden. Die Heizeinrichtung kann dabei nur zu bestimmten Zeitperioden oder dauerhaft betrieben werden. Grundsätzlich kann dabei jedes geeignete Heizmittel eingesetzt werden. Grundsätzlich kann eine Entfeuchtung auch ergänzend oder allein durch ein Behandlungsmittel erfolgen, welches Feuchtigkeit aufnimmt oder entfernt. Ein Behandlungsmittel, insbesondere ein Enteisungsmittel, kann aufgesprüht werden.

Besonders vorteilhaft ist es nach einer Weiterbildung der Erfindung, dass die Heizeinrichtung elektrisch betrieben ist. Die Heizeinrichtung kann dabei insbesondere eine oder mehrere Heizspulen oder Heizdrähte aufweisen, welche sich durch ein Durchleiten von elektrischem Strom erwärmen. Die abgegebene Wärme kann dabei unmittelbar durch Kontaktwärmeleitung oder konvektiv auf das Vermessungsprisma übertragen werden. Insbesondere kann ein Gebläse oder ein Druckbehälter vorgesehen sein, um ein konvektives Aufwärmen des Vermessungsprismas zu unterstützen.

Grundsätzlich kann die Entfeuchtungs- oder Heizeinrichtung an ein bestehendes Stromnetz angeschlossen werden. Für einen mobilen Einsatz ist es besonders vorteilhaft, dass eine elektrische Energiequelle angeordnet ist, insbesondere eine Batterie, ein Akkumulator und/oder eine Solarzelle. Die Reflektoreinheit ist somit hinsichtlich der Energie autark und muss nicht an ein Leitungsnetz angeschlossen werden. Eine Batterie oder ein Akkumulator können bei Bedarf gewechselt oder aufgeladen werden. Das Vorsehen einer oder mehrerer Solarzellen sorgt für eine besonders langfristige autarke Energieversorgung.

Eine besonders energiesparende Variante der Erfindung besteht darin, dass die Heizeinrichtung eine Heizleitung aufweist, welche an dem Vermessungsprisma angebracht ist. Die Heizleitung kann dabei insbesondere nach außen isoliert sein, so dass eine Wärmeübertragung an das vorzugsweise aus einem Glasmaterial bestehende Vermessungsprisma über Wärmeleitung erfolgt.

Besonders zweckmäßig ist es nach einer Weiterbildung der Erfindung, dass die Heizeinrichtung eine Heizfolie umfasst, welche an dem Vermessungsprisma angebracht, insbesondere aufgeklebt ist. Durch eine derartige Heizeinrichtung können auch bestehende Vermessungsprismen in einfacher Weise nachgerüstet werden. Vorzugsweise wird die Heizungseinrichtung und insbesondere die Heizfolie an einer Rückseite oder an einer nicht zur Vermessung benötigten Seitenfläche des Vermessungsprismas angebracht.

Grundsätzlich kann die Reflektoreinrichtung mit einem einfachen Ein- und Ausschalter versehen sein. Erfindungsgemäß ist eine Steuereinheit zum Steuern der Entfeuchtungseinrichtung vorgesehen. Die Steuereinheit kann dabei nach einem vorgegebenen Programm oder nach zugeleiteten Steuerbefehlen die Entfeuchtungseinrichtung gezielt an- und abschalten oder vorzugsweise auch hinsichtlich einer Heizleistung steuern.

Besonders bevorzugt ist es dabei, dass die Steuereinheit eine Zeitschaltuhr zum An- und Abschalten der Entfeuchtungseinrichtung abhängig von vorgebbaren Zeitpunkten aufweist. So kann die Entfeuchtungseinrichtung nur zu bestimmten Zeitpunkten oder Zeitspannen aktiviert sein, was energiesparend ist.

Alternativ oder ergänzend kann es nach einer weiteren Ausführungsvariante der Erfindung vorgesehen sein, dass die Steuereinheit einen Empfänger zum Empfangen von Steuersignalen umfasst. Die Steuersignale können drahtgebunden oder vorzugsweise drahtlos an den Empfänger übertragen werden. Beispielsweise kann so mit einer Fernbedienung die Entfeuchtungseinrichtung bei Bedarf betätigt werden. Die Betätigung kann dabei entsprechend einer Zeitschaltuhr dann für eine vorgegebene Zeitspanne erfolgen, bis sich die Entfeuchtungseinrichtung selbsttätig wieder ausschaltet.

Ein effizienter Einsatz der Reflektorvorrichtung ergibt sich erfindungsgemäß dadurch, dass die Steuereinheit mindestens einen Sensor umfasst, welcher zum Messen einer Außentemperatur, einer Feuchtigkeit, einer Lichtstärke und/oder anderer Umgebungsparameter ausgebildet ist. Auf diese Weise kann die Entfeuchtungseinrichtung abhängig von äußeren Umgebungsbedingungen betätigt werden, beispielsweise wenn eine bestimmte Außentemperatur unterschritten ist, eine bestimmte Luftfeuchtigkeit gegeben ist oder auch zu bestimmten Tageszeiten abhängig von der Lichtstärke. Die verschiedenen Parameter können auch miteinander kombiniert sein, so dass zuverlässig ein Feuchtigkeitsniederschlag an dem Vermessungsprisma vermieden oder entfernt wird.

Eine weitere Verbesserung kann nach einer Weiterbildung der Erfindung dadurch erzielt werden, dass eine Bedachung und/oder ein Schutzgehäuse für das Vermessungsprisma vorgesehen ist. Das Schutzgehäuse kann beispielsweise eine verschließbare Öffnung aufweisen, welche im Fall energiebetätigt geöffnet und geschlossen wird, um so einem Feuchtigkeitsniederschlag entgegenzuwirken.

Weiterhin umfasst die Erfindung eine Tachymeter-Messanordnung mit einem Tachymeter und mindestens einem Vermessungsprisma, wobei die zuvor beschriebene Reflektorvorrichtung vorgesehen ist. Eine derartige Tachymeter-Messanordnung weist vorteilhafterweise mehrere Vermessungsprismen auf.

Dabei ergibt sich eine bevorzugte Ausführungsvariante nach der Erfindung dadurch, dass die Tachymeter-Messanordnung auf einer Baustelle vorgesehen ist und dass ein oder mehrere Reflektorvorrichtungen als Fixpunkte für ein Baustellenkoordinatensystem angeordnet sind. Der verwendete Tachymeter kann dabei ein hinlänglich bekannter Tachymeter sein, insbesondere ein entsprechendes Lasermessgerät. Das Vermessungsprisma kann auf einen festen Pfosten mit der Entfeuchtungseinrichtung angebracht sein.

Weiterhin umfasst die Erfindung ein Messverfahren mit einer solchen Tachymeter-Messanordnung, wobei vor einer Messung Kondenswasser oder Eis auf zumindest einem Vermessungsprisma mittels der Entfeuchtungseinrichtung entfernt wird. Hierbei kommt die zuvor beschriebene erfindungsgemäße Entfeuchtungseinrichtung zum Einsatz.

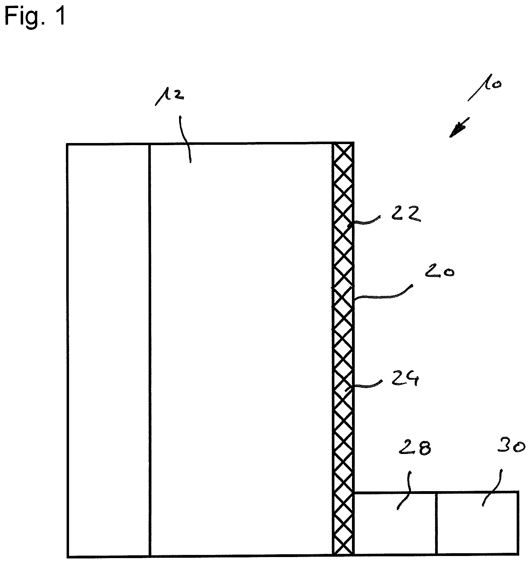

Die Erfindung wird nachfolgend anhand eines bevorzugten Ausführungsbeispieles näher beschrieben, welches schematisch in der beigefügten Zeichnung dargestellt ist.

Eine erfindungsgemäße Reflektorvorrichtung 10 weist ein Vermessungsprisma 12 aus einem transparenten Material, insbesondere Glas, mit einer Reflexionseigenschaft auf. Das grundsätzlich bekannte Vermessungsprisma 12 ist derart ausgebildet, dass dieses einen Messstrahl eines Tachymeters, insbesondere einen Laserstrahl, richtungsgenau an das Tachymeter-Messgerät rückspiegelt.

Gemäß der Erfindung ist an dem Vermessungsprisma 12 an einer Rückseite, welche nicht für den Eintritt des Messstrahles vorgesehen ist, eine Entfeuchtungseinrichtung 20 vorgesehen, welche im dargestellten Ausführungsbeispiel eine Heizeinrichtung 22 ist. Konkret ist die Heizeinrichtung 22 als eine dünne Heizfolie 24 mit elektrischen Heizleitern ausgebildet. Die Heizfolie 24 ist dabei an eine Rückseite des Vermessungsprismas 12 angeklebt.

Zur Versorgung mit elektrischem Strom ist eine Energiequelle 28 an der Entfeuchtungseinrichtung 20 vorgesehen. Die Energiequelle 28 ist insbesondere ein elektrischer Akkumulator, welcher wieder aufladbar ist. Das Aufladen kann beispielsweise mittels einer Solarzelle erfolgen, welche Tageslicht in elektrischen Strom wandelt.

Weiterhin ist die erfindungsgemäße Reflektorvorrichtung 10 mit einer schematisch dargestellten Steuereinheit 30 versehen, durch welche die Entfeuchtungseinrichtung 20 gezielt an- und ausgestellt sowie gesteuert werden kann. Dies kann abhängig von einer Uhrzeit und/oder von äußeren Umgebungsbedingungen durchgeführt werden, welche mittels nicht dargestellter Sensoren erfasst werden. Es kann auch eine Steuerung durch Steuersignale von einer Zentrale oder von einem Bediener erfolgen, wobei die Steuereinheit 30 in diesem Fall mit einer entsprechenden Empfangseinheit versehen ist.

Die Entfeuchtungseinrichtung 20 dient dazu, einem Wasserniederschlag, welcher in flüssiger Form oder als Eiskristalle erfolgen kann, entgegenzuwirken. Die Entfeuchtungseinrichtung 20 kann somit einen bereits bestehenden Niederschlag durch Aufheizen und Verdunsten der Feuchtigkeit den Wasserniederschlag entfernen oder durch eine vorausschauende Aktivierung einem solchen Wasserniederschlag vorbeugend entgegenwirken.

Die erfindungsgemäße Reflektorvorrichtung 10 ist insbesondere für einen Außeneinsatz, insbesondere an Baustellen vorgesehen. Vorzugsweise kann dabei die Reflektorvorrichtung 10 zum Bilden einer Tachymeter-Messanordnung an exponierten Stellen, etwa an vertikalen Pfosten oder anderen feststehenden Elementen an einer Baustelle befestigt werden. Durch die erfindungsgemäße Reflektorvorrichtung 10 wird es dabei ermöglicht, dass ein Vermessungsprisma 12 in einer relativ großen Höhe oder an anderen nur schwer zugänglichen Positionen angebracht werden kann, da ein häufiger Zugang zum Entfernen eines Wasserniederschlages nicht mehr zwingend erforderlich ist.

## Patentansprüche

1. Reflektorvorrichtung für eine Tachymeter-Messanordnung mit einem Vermessungsprisma (12),
mit einer Entfeuchtungseinrichtung (20) gegen einen Wasserniederschlag an dem Vermessungsprisma (12) und
einer Steuereinheit (30) zum Steuern der Entfeuchtungseinrichtung (20), **dadurch gekennzeichnet,**
**dass** die Steuereinheit (30) mindestens einen Sensor umfasst, welcher zum Messen einer Außentemperatur, einer Feuchtigkeit, einer Lichtstärke und/oder anderer Umgebungsparameter ausgebildet ist.

2. Reflektorvorrichtung nach Anspruch 1,
**dadurch gekennzeichnet,**
**dass** die Entfeuchtungseinrichtung (20) eine Heizeinrichtung (22) umfasst.

3. Reflektorvorrichtung nach Anspruch 2,
**dadurch gekennzeichnet,**
**dass** die Heizeinrichtung (22) elektrisch betrieben ist.

4. Reflektorvorrichtung nach einem der Ansprüche 1 bis 3,
**dadurch gekennzeichnet,**
**dass** eine elektrische Energiequelle (28) angeordnet ist, insbesondere eine Batterie, ein Akkumulator und/oder eine Solarzelle.

5. Reflektorvorrichtung nach Anspruch 3 oder 4,
**dadurch gekennzeichnet,**
**dass** die Heizeinrichtung (22) eine Heizleitung aufweist, welche an dem Vermessungsprisma (12) angebracht ist.

6. Reflektorvorrichtung nach einem der Ansprüche 3 bis 5,
**dadurch gekennzeichnet,**
**dass** die Heizeinrichtung (22) eine Heizfolie (24) umfasst, welche an dem Vermessungsprisma (12) angebracht, insbesondere aufgeklebt ist.

7. Reflektorvorrichtung nach Anspruch 1,
**dadurch gekennzeichnet,**
**dass** die Steuereinheit (30) eine Zeitschaltuhr zum An- und Abschalten der Entfeuchtungseinrichtung (20) abhängig von vorgebbaren Zeitpunkten aufweist.

8. Reflektorvorrichtung nach Anspruch 1 oder 7,
**dadurch gekennzeichnet,**
**dass** die Steuereinheit (30) einen Empfänger zum Empfangen von Steuersignalen umfasst.

9. Reflektorvorrichtung nach einem der Ansprüche 1 bis 8,
**dadurch gekennzeichnet,**
**dass** eine Bedachung und/oder ein Schutzgehäuse für das Vermessungsprisma (12) vorgesehen sind.

10. Tachymeter-Messanordnung mit einem Tachymeter und mindestens einem Vermessungsprisma (12),
**dadurch gekennzeichnet,**
**dass** eine Reflektorvorrichtung (10) nach einem der Ansprüche 1 bis 9 vorgesehen ist.

11. Tachymeter-Messanordnung nach Anspruch 10,
**dadurch gekennzeichnet,**
**dass** die Tachymeter-Messanordnung auf einer Baustelle vorgesehen ist und dass eine oder mehrere Reflektorvorrichtungen (10) als Fixpunkte für ein Baustellenkoordinatensystem angeordnet sind.

12. Messverfahren mit einer Tachymeter-Messanordnung,
**dadurch gekennzeichnet,**
**dass** eine Tachymeter-Messanordnung nach Anspruch 10 oder 11 vorgesehen wird und
**dass** vor einer Messung Kondenswasser oder Eis auf zumindest einem Vermessungsprisma (12) mittels der Entfeuchtungseinrichtung (20) entfernt wird.

## Claims

1. Reflector device for a tachymeter measurement arrangement having a surveying prism (12),
having a dehumidifying device (20) against water precipitation on the surveying prism (12) and
a control unit (30) for controlling the dehumidifying device (20), **characterised in that**
the control unit (30) comprises at least one sensor designed to measure outside temperature, humidity, light intensity and/or other environmental parameters.

2. Reflector device according to claim 1,
**characterised in that**
the dehumidifying device (20) comprises a heating device (22).

3. Reflector device according to claim 2,
**characterised in that**
the heating device (22) is electrically operated.

4. Reflector device according to any one of claims 1 to 3,
**characterised in that**
an electrical energy source (28) is arranged, in particular a battery, an accumulator and/or a solar cell.

5. Reflector device according to claim 3 or 4,
**characterised in that**
the heating device (22) has a heating line, which is attached to the surveying prism (12).

6. Reflector device according to any one of claims 3 to 5,
**characterised in that**
the heating device (22) comprises heating foil (24) which is attached, in particular glued, to the surveying prism (12).

7. Reflector device according to claim 1,
**characterised in that**
the control unit (30) has a clock timer for switching the dehumidifying device (20) on and off depending on predeterminable times.

8. Reflector device according to claim 1 or 7,
**characterised in that**
the control unit (30) comprises a receiver for receiving control signals.

9. Reflector device according to any one of claims 1 to 8,
**characterised in that**
a roof covering and/or a protective housing are provided for the surveying prism (12).

10. Tachymeter measurement arrangement having a tachymeter and at least one surveying prism (12),
**characterised in that**
a reflector device (10) according to any one of claims 1 to 9 is provided.

11. Tachymeter measurement arrangement according to claim 10,
**characterised in that**
the tachymeter measurement arrangement is provided on a construction site and **in that** one or more reflector devices (10) are arranged as fixed points for a construction site coordinate system.

12. Measuring method with a tachymeter measurement arrangement,
**characterised in that**
a tachymeter measurement arrangement according to claim 10 or 11 is provided and
**in that** condensation or ice on at least one surveying prism (12) is removed by means of the dehumidifying device (20) before a measurement.

## Revendications

1. Dispositif réflecteur pour un ensemble de mesure tachymétrique avec un prisme de mesure (12),
avec un système de déshumidification (20) contre des précipitations d'eau sur le prisme de mesure (12), et
une unité de commande (30) destinée à commander le système de déshumidification (20),
**caractérisé en ce que**
l'unité de commande (30) comprend au moins un capteur, lequel est réalisé pour mesurer une température extérieure, une humidité, une intensité lumineuse et/ou d'autres paramètres d'environnement.

2. Dispositif réflecteur selon la revendication 1,
**caractérisé en ce que**
le système de déshumidification (20) comprend un système de chauffage (22).

3. Dispositif réflecteur selon la revendication 2,
**caractérisé en ce que**
le système de chauffage (22) fonctionne de manière électrique.

4. Dispositif réflecteur selon l'une quelconque des revendications 1 à 3,
**caractérisé en ce qu'**
une source d'énergie électrique (28) est disposée, en particulier une batterie, un accumulateur et/ou une cellule solaire.

5. Dispositif réflecteur selon la revendication 3 ou 4,
**caractérisé en ce que**
le système de chauffage (22) présente un conduit de chauffage, lequel est installé sur le prisme de mesure (12).

6. Dispositif réflecteur selon l'une quelconque des revendications 3 à 5,
**caractérisé en ce que**
le système de chauffage (22) comprend un film chauffant (24), lequel est installé, en particulier collé, sur le prisme de mesure (12).

7. Dispositif réflecteur selon la revendication 1,
**caractérisé en ce que**
l'unité de commande (30) présente une minuterie destinée à mettre en marche et à arrêter le système de déshumidification (20) en fonction de moments pouvant être spécifiés.

8. Dispositif réflecteur selon la revendication 1 ou 7,
**caractérisé en ce que**
l'unité de commande (30) comprend un récepteur destiné à recevoir des signaux de commande.

9. Dispositif réflecteur selon l'une quelconque des revendications 1 à 8,
**caractérisé en ce que**
sont prévus un toit et/ou un boîtier de protection pour le prisme de mesure (12).

10. Ensemble de mesure tachymétrique avec un tachymètre et au moins un prisme de mesure (12),
**caractérisé en ce qu'**
un dispositif réflecteur (10) selon l'une quelconque des revendications 1 à 9 est prévu.

11. Ensemble de mesure tachymétrique selon la revendication 10,
**caractérisé en ce que**
l'ensemble de mesure tachymétrique est prévu sur un chantier de construction et qu'un ou plusieurs dispositifs réflecteurs (10) sont disposés en tant que points fixes pour un système de coordonnées de chantier de construction.

12. Procédé de mesure avec un ensemble de mesure tachymétrique,
**caractérisé en ce qu'**
un ensemble de mesure tachymétrique selon la revendication 10 ou 11 est prévu, et
que de l'eau de condensation ou de la glace sur au moins un prisme de mesure (12) est retirée au moyen du système de déshumidification (20) avant une mesure.
